# EUROPEAN PATENT APPLICATION

(11) **EP 4 141 839 A1**
(43) Date of publication of application: **01.03.2023**
(21) Application number: 22181392.6
(22) Date of filing: 27.06.2022
(51) Int. Cl.: G08G 1/16, B60R 11/02, B60R 11/00

(54) **DANGER NOTIFICATION METHOD, DANGER NOTIFICATION DEVICE, AND NON-TRANSITORY STORAGE MEDIUM**

(30) Priority: 25.08.2021 JP 2021137270
(71) Applicant: TOYOTA JIDOSHA KABUSHIKI KAISHA, Toyota-shi, Aichi-ken, 471-8571 (JP)
(72) Inventor: MORIMURA, Junichi, TOYOTA-SHI, AICHI-KEN, 471-8571 (JP); OMI, Satoshi, TOYOTA-SHI, AICHI-KEN, 471-8571 (JP)
(74) Representative: Cabinet Beau de Loménie

(57) **Abstract**

A first object approaching a vehicle in a first direction and a second object approaching the vehicle in a second direction are detected. In response to detection of the first object and the second object, the first object is notified about the presence of the second object by using a notification device, and the second object is notified about the presence of the first object by using the notification device.

## Description

### 1. Field of the Invention

The present disclosure relates to a danger notification method for notifying surroundings about danger by using a notification device mounted on a vehicle, and also relates to a danger notification device and a non-transitory storage medium.

### 2. Description of Related Art

British Patent No. 2531084 proposes means for notifying pedestrians from an autonomous driving vehicle. Examples of the proposed notification means include colors, text messages, and sounds. The notification means is described as means for communication with pedestrians.

In addition to British Patent No. 2531084, Japanese Unexamined Patent Application Publication Nos. 2013-120574 (JP 2013-120574 A) and 2017-174449 (JP 2017-174449 A) are exemplified as documents showing technical levels at the time of filing in the technical field of the present disclosure or related technical fields.

### SUMMARY OF THE INVENTION

In a traffic environment including a plurality of traffic participants, a blind spot around a vehicle may be a problem. For example, it is assumed that a pedestrian is crossing a road by passing in front of a stopped or slow vehicle. In this case, the pedestrian tends to monitor the surrounding area inattentively as compared with monitoring at the start of crossing because of the sense of security created by the stop of the vehicle. Therefore, if another vehicle appears from the blind spot of the stopped or slow vehicle, there is a possibility that the pedestrian cannot avoid contact with the suddenly appearing vehicle. If a pedestrian suddenly appears when a vehicle has passed by a stopped or slow vehicle, it may be difficult for the traveling vehicle to avoid contact with the suddenly appearing pedestrian.

The present disclosure provides a technology that contributes to reduction of contact accidents between objects around a vehicle.

The present disclosure provides a danger notification method. A danger notification method according to a first aspect of the present disclosure is a method using a notification device mounted on a vehicle. The danger notification method according to the first aspect of the present disclosure includes at least two steps. The first step is detecting a first object approaching the vehicle in a first direction and a second object approaching the vehicle in a second direction. The first object approaching the vehicle in the first direction may be detected and, in response to the detection of the first object, the second object approaching the vehicle in the second direction may be detected. The second step is notifying the first object and the second object about presence of each other by using the notification device in response to detection of the first object and the second object.

In the danger notification method according to the first aspect of the present disclosure, the first object and the second object may be notified about the presence of each other when determination is made that the first object and the second object are in a positional relationship in which the first object and the second object are invisible to each other by being obstructed by the vehicle. The first object and the second object may be notified about the presence of each other when determination is made that there is a possibility of intersection of a moving direction of the first object and a moving direction of the second object. The first object and the second object may be notified about the presence of each other when determination is made that there is a possibility of an overlap between a future position of the first object that is predicted from a motion of the first object and a future position of the second object that is predicted from a motion of the second object.

In the danger notification method according to the first aspect of the present disclosure, the notifying the first object and the second object about the presence of each other may include displaying second-object information for notifying the first object about presence of the second object on a display device for the first object, and displaying first-object information for notifying the second object about presence of the first object on the display device for the second object. The display device may include a first display panel and a second display panel oriented in different directions from each other. In this configuration, the displaying the second-object information on the display device for the first object may include displaying the second-object information on the first display panel visible to the first object. The displaying the first-object information on the display device for the second object may include displaying the first-object information on the second display panel visible to the second object.

The displaying the second-object information on the first display panel may include displaying a symbolic image of the second object. The displaying the symbolic image of the second object may include increasing a size of the symbolic image of the second object as the second object approaches the first object. The displaying the second-object information on the first display panel may include highlighting the second-object information as the second object approaches the first object.

The displaying the first-object information on the second display panel may include displaying a symbolic image of the first object. The displaying the symbolic image of the first object may include increasing a size of the symbolic image of the first object as the first object approaches the second object. The displaying the first-object information on the second display panel may include highlighting the first-object information as the first object approaches the second object.

The danger notification method according to the first aspect of the present disclosure may further include executing the danger notification method when the vehicle is stopped or traveling slowly.

A second aspect of the present disclosure provides a danger notification device. The danger notification device according to the second aspect of the present disclosure is a device to be mounted on a vehicle, and includes an information acquisition device configured to acquire information related to a surrounding situation of the vehicle, a notification device configured to give a notification toward an outside of the vehicle, and a control device. The control device is configured to perform at least two processes. The first process is to detect a first object approaching the vehicle in a first direction and a second object approaching the vehicle in a second direction based on the information acquired by the information acquisition device. The second process is to notify the first object and the second object about presence of each other by using the notification device in response to detection of the first object and the second object.

A third aspect of the present disclosure provides a non-transitory storage medium storing instructions to be executed by one or more processors. The non-transitory storage medium according to the third aspect of the present disclosure is configured to store instructions that cause the one or more processors to perform at least two processes. The first process is detecting a first object approaching a vehicle in a first direction and a second object approaching the vehicle in a second direction. The second process is notifying the first object and the second object about presence of each other by using a notification device mounted on the vehicle in response to detection of the first object and the second object.

According to the aspects of the present disclosure, when the first object approaching the vehicle in the first direction and the second object approaching the vehicle in the second direction are present around the vehicle, the first object is notified about the presence of the second object by using the notification device, and the second object is notified about the presence of the first object by using the notification device. As a result, the first object and the second object can recognize the presence of each other that may lead to contact. As described above, the aspects of the present disclosure can contribute to the reduction of the contact accidents between the objects around the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of mounting of external sensors of a vehicle to which a danger notification device according to an embodiment of the present disclosure is applied;
FIG. 2A is a diagram showing an example of mounting of display panels of the vehicle to which the danger notification device according to the embodiment of the present disclosure is applied;
FIG. 2B is a diagram showing the example of mounting of the display panels of the vehicle to which the danger notification device according to the embodiment of the present disclosure is applied;
FIG. 3 is a diagram showing a system configuration of the danger notification device according to the embodiment of the present disclosure;
FIG. 4 is a diagram illustrating an outline of a danger notification method to be executed by the danger notification device according to the embodiment of the present disclosure;
FIG. 5 is a diagram illustrating the outline of the danger notification method to be executed by the danger notification device according to the embodiment of the present disclosure;
FIG. 6 is a flowchart showing logic of a danger notification program according to the embodiment of the present disclosure;
FIG. 7 is a flowchart showing logic of an approach determination routine included in the danger notification program;
FIG. 8 is a flowchart showing logic of an object intersection processing routine included in the approach determination routine;
FIG. 9 is a diagram schematically showing a moving direction probability model;
FIG. 10 is a flowchart showing logic of a display processing routine included in the danger notification program;
FIG. 11 is a flowchart showing logic of the display processing routine included in the danger notification program;
FIG. 12 is a flowchart showing logic of an urgency determination routine included in the display processing routine;
FIG. 13 is a diagram showing an example of highlighting on the display panel based on a distance between objects;
FIG. 14 is a schematic diagram illustrating that a rush-out accident at a crosswalk is avoided by the danger notification method according to the embodiment of the present disclosure;
FIG. 15 is a schematic diagram illustrating that the rush-out accident at the crosswalk is avoided by the danger notification method according to the embodiment of the present disclosure;
FIG. 16 is a schematic diagram illustrating that a contact accident between a right-turning vehicle and an oncoming straightforward vehicle is avoided by the danger notification method according to the embodiment of the present disclosure;
FIG. 17 is a schematic diagram illustrating that the contact accident between the right-turning vehicle and the oncoming straightforward vehicle is avoided by the danger notification method according to the embodiment of the present disclosure;
FIG. 18 is a schematic diagram illustrating that a so-called "thank-you" accident is avoided by the danger notification method according to the embodiment of the present disclosure; and
FIG. 19 is a schematic diagram illustrating that the so-called "thank-you" accident is avoided by the danger notification method according to the embodiment of the present disclosure.

### DETAILED DESCRIPTION OF EMBODIMENTS

An embodiment of the present disclosure will be described below with reference to the drawings. When the number, quantity, amount, range, etc. of each element are mentioned in the embodiment below, the present invention is not limited to the mentioned numerical values unless otherwise specified or unless the number, quantity, amount, range, etc. of the element are obviously limited to the mentioned numerical values in principle. The structures etc. that will be described in the following embodiment are not necessarily essential to the present invention unless otherwise specified or unless the structures etc. are obviously limited to the mentioned structures etc. in principle.

### 1. Configuration of Danger Notification Device

First, the configuration of a danger notification device according to the present embodiment will be described. The danger notification device according to the present embodiment is applied to an autonomous driving vehicle capable of traveling autonomously.

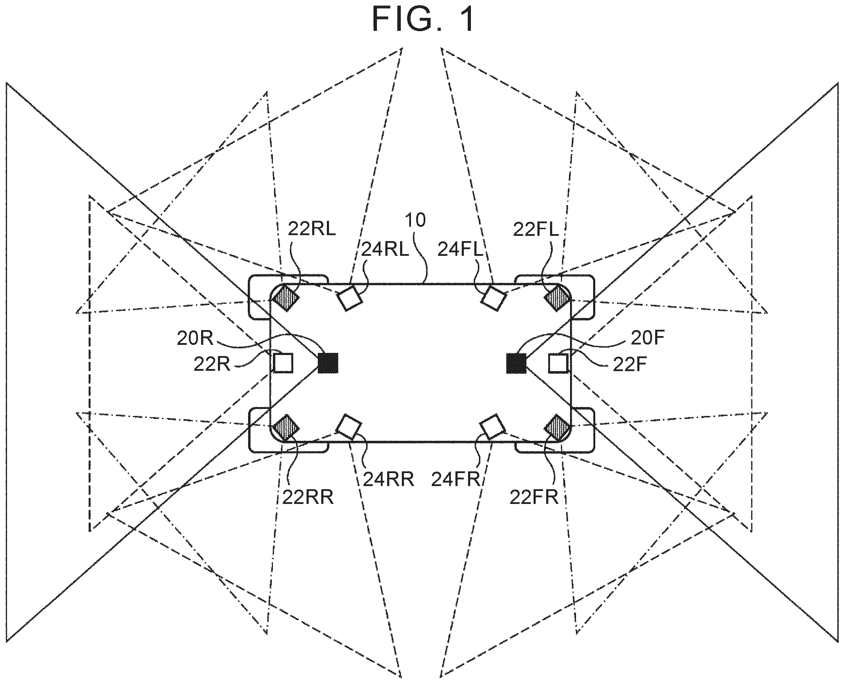

FIG. 1 is a diagram showing an example of mounting of external sensors of an autonomous driving vehicle 10 to which the danger notification device according to the present embodiment is applied. The autonomous driving vehicle 10 shown in FIG. 1 is a city bus or a bus-type vehicle to be used in on-demand traffic. The autonomous driving vehicle 10 is hereinafter referred to simply as "vehicle 10". The external sensors mounted on the vehicle 10 are typically cameras, light detection and ranging (Lidar) sensors, and radars. In FIG. 1, a detection range indicated by a continuous line is an example of a detection range of the camera, a detection range indicated by a dashed line is an example of a detection range of the Lidar sensor, and a detection range indicated by a long dashed short dashed line is an example of a detection range of the radar.

In the example shown in FIG. 1, a front camera 20F for imaging the front and a rear camera 20R for imaging the rear are mounted as in-vehicle cameras. A front Lidar sensor 22F for detecting the front, a left front Lidar sensor 22FL for detecting the left front, a right front Lidar sensor 22FR for detecting the right front, a rear Lidar sensor 22R for detecting the rear, a left rear Lidar sensor 22RL for detecting the left rear, and a right rear Lidar sensor 22RR for detecting the right rear are mounted as in-vehicle Lidar sensors. A left front radar 24FL for detecting the left front, a right front radar 24FR for detecting the right front, a left rear radar 24RL for detecting the left rear, and a right rear radar 24RR for detecting the right rear are mounted as in-vehicle radars.

An autonomous driving system of the vehicle 10 recognizes a surrounding situation by using the plurality of types of external sensors described above, and causes the vehicle 10 to autonomously travel based on a recognition result. Specifically, the autonomous driving system estimates its position by comparison with map information based on information from the Lidar sensors. The autonomous driving system performs dynamic obstacle tracking based on information from the radars and the Lidar sensors, and discriminates lanes based on fusion results. At this time, basic recognition of three-dimensional objects is performed by the Lidar sensors, and measurement of distances to moving objects is performed by the radars. A traveling plan for causing the vehicle 10 to safely travel in compliance with traffic regulations is created based on, for example, a self-position estimation result, a lane discrimination result, map information including a traveling route, traffic light information recognized by the camera, and a target route determined by a navigation system.

The autonomous driving system generates a target trajectory based on the traveling plan. The target trajectory is a traveling trajectory to be finally followed by the vehicle 10, and is determined in consideration of collision with an obstacle located ahead of the vehicle 10 and detected by the external sensor. The target trajectory includes a set of target positions of the vehicle 10 on a road where the vehicle 10 travels, and target speeds at the respective target positions. To cause the vehicle 10 to follow the target trajectory, the autonomous driving system calculates deviations (lateral deviation, yaw angle deviation, speed deviation, etc.) between the vehicle 10 and the target trajectory, and controls steering, braking, or driving of the vehicle 10 to reduce the deviations.

The danger notification device according to the present embodiment uses the plurality of types of external sensors for use in the autonomous driving system as information acquisition devices for acquiring information related to the surrounding situation of the vehicle 10. Among the external sensors serving as the information acquisition devices, the Lidar sensors are mainly used for detecting three-dimensional objects around the vehicle 10. The cameras or radars may be used as detectors instead of or in combination with the Lidar sensors.

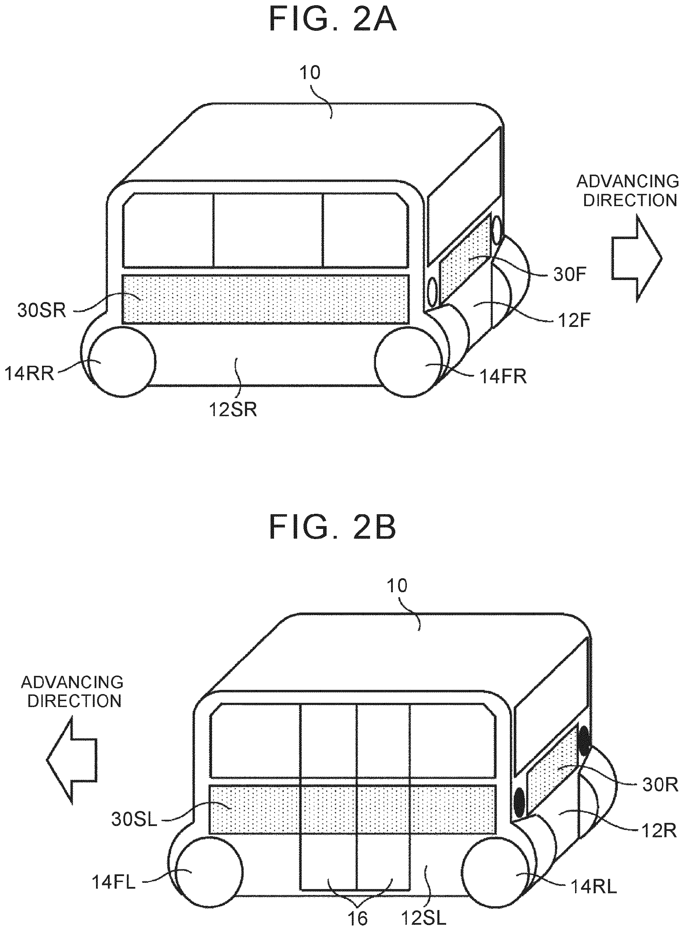

The danger notification device according to the present embodiment includes a notification device that gives a notification toward the outside of the vehicle 10. The notification device according to the present embodiment is a display device that presents visual information on display panels. FIGS. 2A and 2B are diagrams showing an example of mounting of the display panels of the vehicle 10 to which the danger notification device according to the present embodiment is applied.

FIG. 2A schematically shows the appearance of the vehicle 10 viewed from the right front side. As shown in FIG. 2A, a front display panel 30F is attached to a front surface 12F of the vehicle 10. The front display panel 30F is wide in a width direction of the vehicle 10 to extend between headlights. A right side display panel 30SR is attached to a right side surface 12SR of the vehicle 10. The right side display panel 30SR is wide in a fore-and-aft direction of the vehicle 10 to extend in a range from a right front wheel 14FR to a right rear wheel 14RR.

FIG. 2B schematically shows the appearance of the vehicle 10 viewed from the left rear side. As shown in FIG. 2B, a rear display panel 30R is attached to a rear surface 12R of the vehicle 10. The rear display panel 30R is wide in the width direction of the vehicle 10 to extend between taillights. A left side display panel 30SL is attached to a left side surface 12SL of the vehicle 10. The left side display panel 30SL is wide in the fore-and-aft direction of the vehicle 10 to extend in a range from a left front wheel 14FL to a left rear wheel 14RL. The left side display panel 30SL is divided into a plurality of parts at a boarding door 16.

As described above, the four display panels 30F, 30R, 30SR, and 30SL constituting the notification device are attached to be oriented in different directions. As a result, traffic participants around the vehicle 10 can view at least one of the display panels 30F, 30R, 30SR, and 30SL from any angles. Each of the display panels 30F, 30R, 30SR, and 30SL is a display panel capable of changing display contents, such as a liquid crystal display panel, an organic electroluminescence (EL) display panel, or a light-emitting diode (LED) display panel.

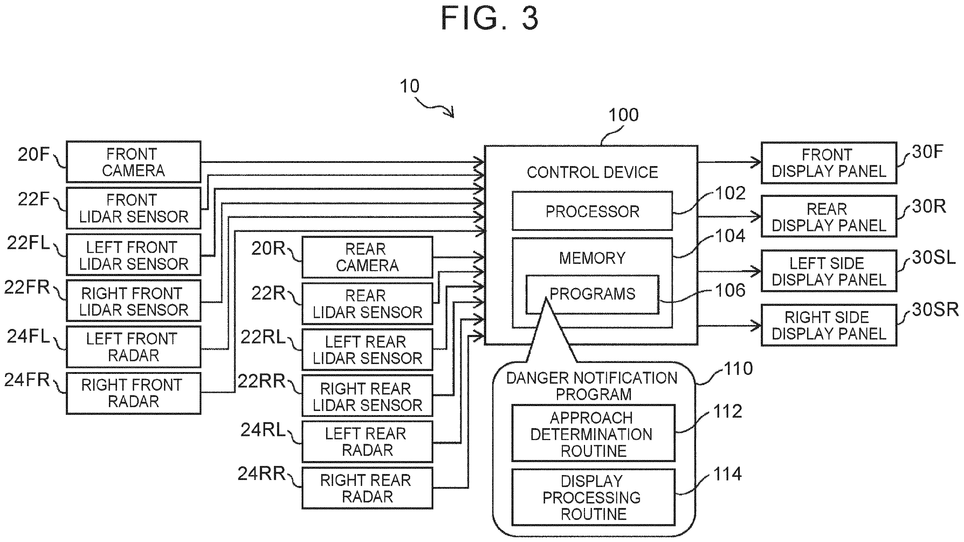

FIG. 3 is a diagram showing a system configuration of the danger notification device according to the embodiment of the present disclosure. The danger notification device includes a control device 100. Pieces of information obtained by the plurality of types of external sensors mounted on the vehicle 10, that is, the cameras 20F and 20R, the Lidar sensors 22F, 22FL, 22FR, 22R, 22RL, and 22RR, and the radars 24FL, 24FR, 24RL, and 24RR are transmitted to the control device 100. The external sensors are connected to the control device 100 by an in-vehicle network. The display panels 30F, 30R, 30SR, and 30SL mounted on the vehicle 10 are also connected to the control device 100 by the in-vehicle network. The display contents on the display panels 30F, 30R, 30SR, and 30SL are individually controlled based on control signals transmitted from the control device 100.

The control device 100 is an in-vehicle computer including a processor 102 and a memory 104. The control device 100 may be a single electronic control unit (ECU) or may be an aggregate of a plurality of ECUs. The control device 100 may be an ECU common to the ECU constituting the autonomous driving system, or may be another ECU. The memory 104 stores various programs 106 that can be executed by the processor 102, and data related to the programs 106. The memory 104 may herein include, in addition to a memory in a narrow sense such as a random access memory (RAM), a data storage device typified by a magnetic disk such as a hard disk drive (HDD), an optical disc such as a digital versatile disc (DVD), and a flash memory storage device such as a solid-state drive (SSD).

The programs 106 stored in the memory 104 include a danger notification program 110. The danger notification program 110 causes the control device 100 to execute danger notification using the in-vehicle notification device, that is, the display panels 30F, 30R, 30SR, and 30SL. The danger notification program 110 includes an approach determination routine 112 and a display processing routine 114. When the danger notification program 110 including these routines 112 and 114 is executed by the processor 102, a danger notification method according to the present embodiment is executed by the danger notification device.

### 2. Outline of Danger Notification Method

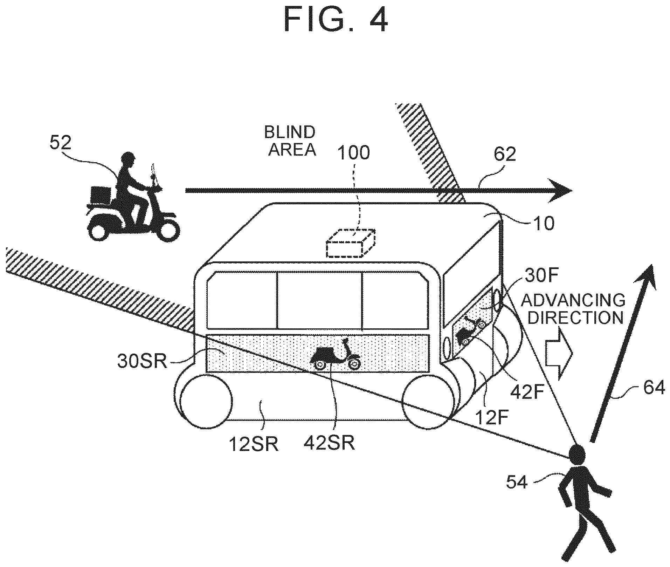

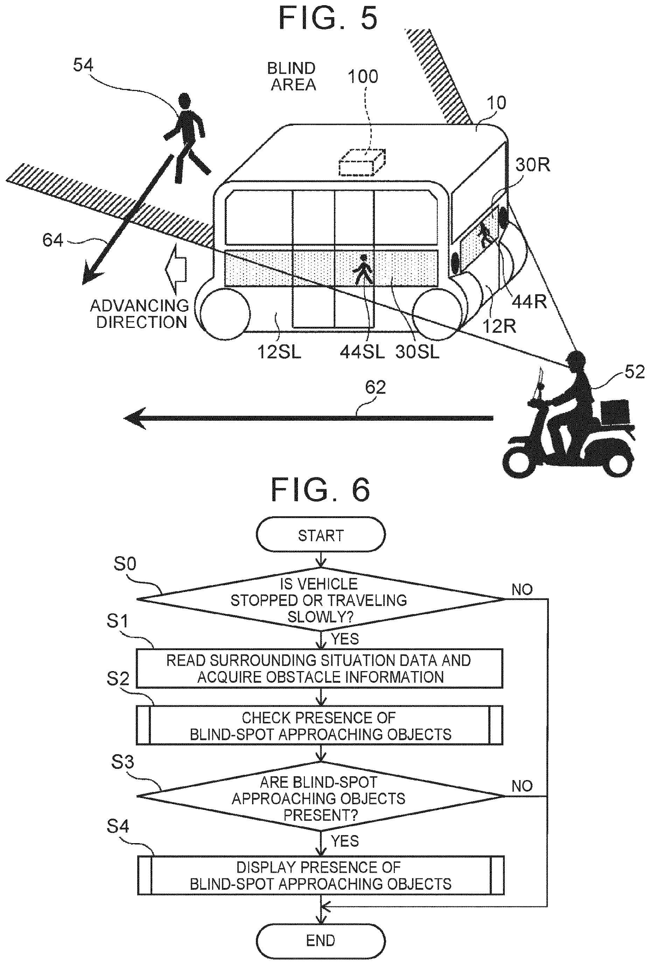

Next, an outline of the danger notification method to be executed by the danger notification device according to the present embodiment will be described with reference to FIGS. 4 and 5. FIG. 4 schematically shows a surrounding situation of the vehicle 10 on the right front side of the vehicle 10. FIG. 5 schematically shows a surrounding situation of the vehicle 10 on the left rear side of the vehicle 10. The surrounding situation shown in FIG. 4 and the surrounding situation shown in FIG. 5 coincide in time.

In the example shown in FIGS. 4 and 5, a pedestrian 54 is located on the right front side of the vehicle 10, and a motorcycle 52 is located on the left rear side of the vehicle 10. When the vehicle 10, the pedestrian 54, and the motorcycle 52 are in such a positional relationship, the pedestrian 54 and the motorcycle 52 are obstructed by the vehicle 10 and cannot see each other. That is, as shown in FIG. 4, the motorcycle 52 enters a blind area invisible to the pedestrian 54, and as shown in FIG. 5, the pedestrian 54 enters a blind area invisible from the motorcycle 52.

In the example shown in FIGS. 4 and 5, the pedestrian 54 is about to cross the road by passing in front of the vehicle 10 traveling slowly. The motorcycle 52 is about to overtake the vehicle 10 traveling slowly by passing on the left side of the vehicle 10. When the pedestrian 54 and the motorcycle 52 make such motions, a moving direction 64 of the pedestrian 54 and a moving direction 62 of the motorcycle 52 intersect each other. The pedestrian 54 and the motorcycle 52 can recognize the presence of each other only after the pedestrian 54 has passed in front of the vehicle 10 or after the motorcycle 52 has passed on the left side of the vehicle 10. Therefore, the pedestrian 54 and the motorcycle 52 may come into contact with each other depending on timing.

In the danger notification method according to the present embodiment, the control device 100 detects a first object approaching the vehicle 10 in a first direction based on information obtained by the external sensor. In response to the detection of the first object, the control device 100 detects a second object approaching the vehicle 10 in a second direction based on information obtained by the external sensor. In the example shown in FIGS. 4 and 5, the first object is the pedestrian 54 approaching the vehicle 10 from the right front side of the vehicle 10 (in the first direction), and the second object is the motorcycle 52 approaching the vehicle 10 from the left rear side of the vehicle 10 (in the second direction). Since the first object is detected first and the second object is detected later, the motorcycle 52 may be the first object and the pedestrian 54 may be the second object.

In the danger notification method according to the present embodiment, in response to the detection of the first object and the second object, the control device 100 notifies the first object and the second object about the presence of each other by using the display panels 30F, 30R, 30SR, and 30SL. Specifically, as shown in FIG. 4, the front display panel 30F and the right side display panel 30SR visible to the pedestrian 54 display symbolic images 42F and 42SR of the motorcycle 52, respectively. These symbolic images 42F and 42SR are second-object information for notifying the pedestrian 54 being the first object about the presence of the motorcycle 52 being the second object. As shown in FIG. 5, the rear display panel 30R and the left side display panel 30SL visible to the motorcycle 52 display symbolic images 44R and 44SL of the pedestrian 54, respectively. These symbolic images 44R and 44SL are first-object information for notifying the motorcycle 52 being the second object about the presence of the pedestrian 54 being the first object.

By displaying the symbolic images 42F and 42SR of the motorcycle 52 on the display panels 30F and 30SR, the pedestrian 54 who is about to cross the road by passing in front of the vehicle 10 can recognize the presence of the motorcycle 52 in the blind spot of the vehicle 10. The control device 100 changes the positions of the symbolic images 42F and 42SR on the display panels 30F and 30SR depending on the positional relationship among the motorcycle 52, the vehicle 10, and the pedestrian 54. For example, as the overtaking for the motorcycle 52 progresses, the symbolic image 42F on the front display panel 30F is moved to the left side of the vehicle 10 and the symbolic image 42SR on the right side display panel 30SR is moved to the front side of the vehicle 10. When the pedestrian 54 has moved to a point in front of the vehicle 10, only the front display panel 30F visible to the pedestrian 54 displays the symbolic image 42F.

By displaying the symbolic images 44R and 44SL of the pedestrian 54 on the display panels 30R and 30SL, the motorcycle 52 that is about to overtake the vehicle 10 by passing on the left side of the vehicle 10 can recognize the presence of the pedestrian 54 in the blind spot of the vehicle 10. The control device 100 changes the positions of the symbolic images 44R and 44SL on the display panels 30R and 30SL depending on the positional relationship among the pedestrian 54, the vehicle 10, and the motorcycle 52. For example, as the road crossing for the pedestrian 54 progresses, the symbolic image 44R on the rear display panel 30R is moved to the left side of the vehicle 10 and the symbolic image 44SL on the left side display panel 30SL is moved to the front side of the vehicle 10. When the motorcycle 52 has moved to a point on the side of the vehicle 10, only the left side display panel 30SL visible to the motorcycle 52 displays the symbolic image 44SL.

In the danger notification method according to the present embodiment described above, when the first object is approaching the vehicle 10 in the first direction and the second object is approaching the vehicle 10 in the second direction, the first object is notified about the presence of the second object by using the display panel visible to the first object, and the second object is notified about the presence of the first object by using the display panel visible to the second object. As a result, the first object and the second object can recognize the presence of each other that may lead to contact, thereby reducing the possibility of a contact accident between the first object and the second object due to the blind spots around the vehicle 10.

### 3. Details of Danger Notification Method

The danger notification method according to the present embodiment is executed by the control device 100 such that the processor 102 executes the danger notification program 110. Details of the danger notification method according to the present embodiment will clearly be described in detail below through description of the danger notification program 110 to be executed by the processor 102.

FIG. 6 is a flowchart showing logic of the danger notification program 110. In Step SO of this flowchart, determination is made as to whether the vehicle 10 is stopped or traveling slowly. When a positive determination result is obtained in Step S0 because the vehicle 10 is stopped or traveling slowly, Step S1 is executed. When a negative determination result is obtained in Step S0, the danger notification program 110 is terminated. In Step S1, surrounding situation data of the vehicle 10 is read by the external sensors. Obstacles around the vehicle 10 are identified from the surrounding situation data, and obstacle information including the types of the identified obstacles, distances of the obstacles from the vehicle 10, and relative speeds of the obstacles is acquired.

In Step S2, the presence of blind-spot approaching objects is checked. The blind-spot approaching objects mean two objects that enter the blind spots around the vehicle 10 and approach each other while being invisible to each other. The presence of the blind-spot approaching objects is checked in the approach determination routine 112 that is a subroutine of the danger notification program 110.

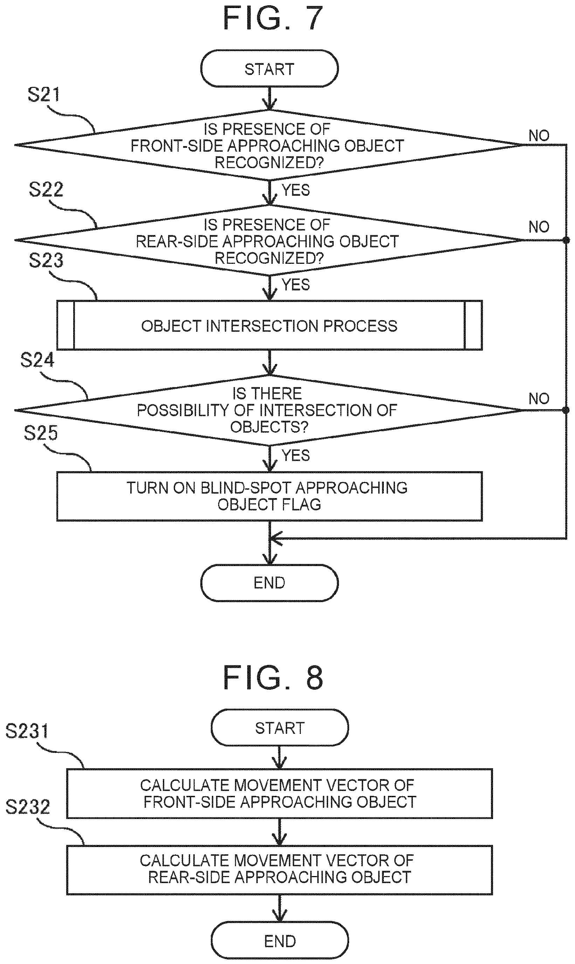

FIG. 7 is a flowchart showing logic of the approach determination routine 112 included in the danger notification program 110. In Step S21 of this flowchart, the presence of a front-side approaching object is checked based on the obstacle information acquired in Step S1. The front-side approaching object means an object approaching the vehicle 10 from the front side of the vehicle 10. In the example shown in FIGS. 4 and 5, the pedestrian 54 corresponds to the front-side approaching object. When the presence of the front-side approaching object is not recognized by the check, the approach determination routine 112 is terminated.

Step S22 is executed in response to the recognition of the presence of the front-side approaching object by the check. In Step S22, the presence of a rear-side approaching object is checked based on the obstacle information acquired in Step S1. The rear-side approaching object means an object approaching the vehicle 10 from the rear side of the vehicle 10. In the example shown in FIGS. 4 and 5, the motorcycle 52 corresponds to the rear-side approaching object. When the presence of the rear-side approaching object is not recognized by the check, the approach determination routine 112 is terminated.

Step S23 is executed in response to the recognition of the presence of the front-side approaching object and the rear-side approaching object by the check. In Step S23, an object intersection process is executed. The object intersection process is a preprocess for determining whether the front-side approaching object intersects the rear-side approaching object. The object intersection process is executed in an object intersection processing routine that is a subroutine of the approach determination routine 112.

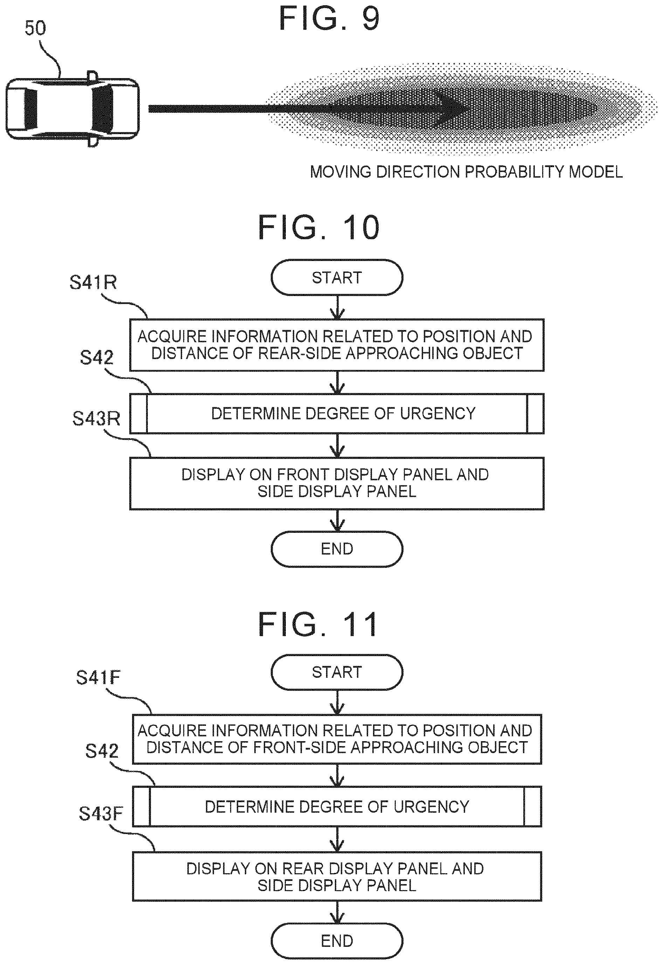

FIG. 8 is a flowchart showing logic of the object intersection processing routine included in the approach determination routine 112. In this flowchart, a movement vector of the front-side approaching object is calculated in Step S231, and a movement vector of the rear-side approaching object is calculated in Step S232. In the calculation of the movement vector, it is assumed that the motion of an object after a predetermined period is determined based on a Gaussian distribution including influence of the past traveling history. Based on this assumption, a moving direction of an object 50 is predicted by using a moving direction probability model schematically shown in FIG. 9.

Returning to FIG. 7, the description of the flowchart of the approach determination routine 112 will be continued. In Step S24, determination is made as to whether there is a possibility of intersection of the front-side approaching object and the rear-side approaching object based on a result of the object intersection process executed in Step S23. The intersection of the front-side approaching object and the rear-side approaching object in the danger notification program 110 means that the movement vector of the front-side approaching object intersects the movement vector of the rear-side approaching object. That is, determination is made as to whether the moving direction of the front-side approaching object simply intersects the moving direction of the rear-side approaching object, instead of calculating the possibility of collision between the front-side approaching object and the rear-side approaching object. Determination may be made as to whether there is an overlap between a future position of the front-side approaching object that is predicted from the motion of the front-side approaching object and a future position of the rear-side approaching object that is predicted from the motion of the rear-side approaching object, that is, whether there is a possibility of collision between the front-side approaching object and the rear-side approaching object. When there is no possibility of intersection of the front-side approaching object and the rear-side approaching object, the approach determination routine 112 is terminated.

Step S25 is executed in response to the determination that there is a possibility of intersection of the front-side approaching object and the rear-side approaching object. In Step S25, a blind-spot approaching object flag is turned ON. The blind-spot approaching object flag means that the presence of the blind-spot approaching objects is recognized by the check.

Returning to FIG. 6, the description of the flowchart of the danger notification program 110 will be continued. In Step S3, determination is made as to whether the blind-spot approaching objects are present based on a result of the check on the presence of the blind-spot approaching objects in Step S2. When the blind-spot approaching object flag is ON in the approach determination routine 112, a positive determination result is obtained in Step S3. When a negative determination result is obtained in Step S3, the danger notification program 110 is terminated.

Step S4 is executed in response to the recognition of the presence of the blind-spot approaching objects by the check. In Step S4, the presence of the blind-spot approaching objects is displayed. The presence of the blind-spot approaching objects is displayed in the display processing routine 114 that is a subroutine of the danger notification program 110.

FIGS. 10 and 11 are flowcharts showing logic of the display processing routine 114 included in the danger notification program 110. The display processing routine 114 includes a front-side display processing routine for notifying the front-side approaching object about danger, and a rear-side display processing routine for notifying the rear-side approaching object about danger. FIG. 10 is a flowchart showing logic of the front-side display processing routine. FIG. 11 is a flowchart showing logic of the rear-side display processing routine.

In the flowchart shown in FIG. 10, information related to the position and distance of the rear-side approaching object is acquired in Step S41R. In the flowchart shown in FIG. 11, information related to the position and distance of the front-side approaching object is acquired in Step S41F. The position and distance in Steps S41R and S41F mean the relative position and relative distance to the vehicle 10.

In common Step S42, the degree of urgency is determined. The urgency means urgency over the danger notification for each of the front-side approaching object and the rear-side approaching object. The degree of urgency is determined in an urgency determination routine that is a subroutine of the display processing routine 114.

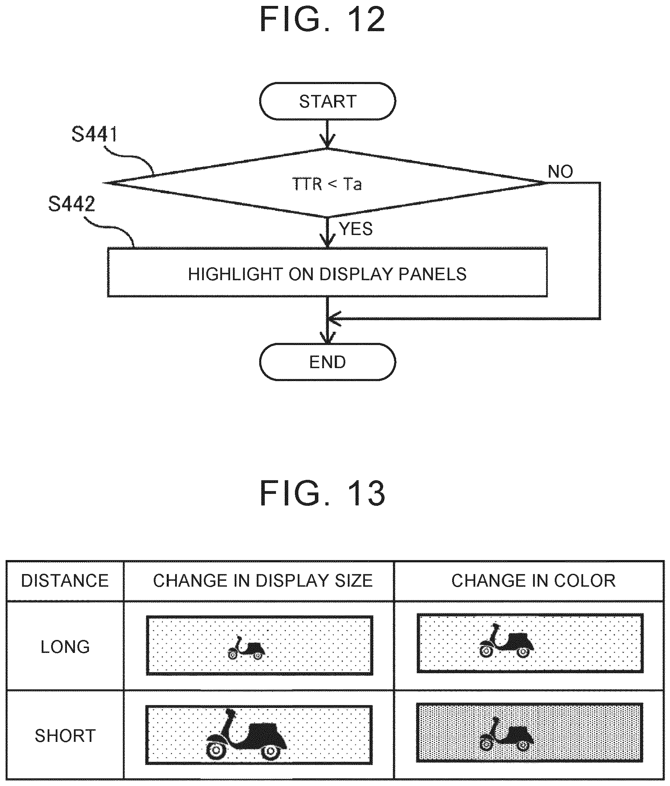

FIG. 12 is a flowchart showing logic of the urgency determination routine included in the display processing routine 114. In Step S441 of this flowchart, determination is made as to whether a period to be taken until the front-side approaching object and the rear-side approaching object come into contact with each other (Time To Reach: TTR) is shorter than a predetermined reference period Ta. In the danger notification program 110, it is not necessarily assumed that the front-side approaching object and the rear-side approaching object come into contact with each other. A period to be taken until the front-side approaching object and the rear-side approaching object intersect each other is calculated as the TTR. When the TTR is equal to or longer than Ta, determination is made that the degree of urgency is low, and the urgency determination routine is terminated.

Step S442 is executed in response to determination that the TTR is shorter than Ta. In Step S442, determination is made that the degree of urgency is high, and a highlighting flag for the display panels is turned ON. When the highlighting flag is turned ON, the symbolic images of the front-side approaching object and the rear-side approaching object are highlighted on the display panels in steps described later. FIG. 13 is a diagram showing an example of highlighting on the display panel based on a distance between objects. When the distance between the objects is long, that is, when the degree of urgency is low, the symbolic image is reduced in size or the display color on the display panel is set to an inconspicuous color. When the distance between the objects is short, that is, when the degree of urgency is high, the symbolic image is increased in size or the display color on the display panel is set to a conspicuous color.

Returning to FIGS. 10 and 11, the description of the flowchart of the display processing routine 114 will be continued. In Step S43R of the flowchart shown in FIG. 10, the front display panel 30F and the side display panel 30SL or 30SR display symbolic images of the rear-side approaching object. In Step S43F of the flowchart shown in FIG. 11, the rear display panel 30R and the side display panel 30SR or 30SL display symbolic images of the front-side approaching object. When the highlighting flag is turned ON in the urgency determination in Step S42, the symbolic images are highlighted in Steps S43F and S43R.

When the processor 102 executes the danger notification program 110 described in detail above in a predetermined execution cycle, the danger notification method according to the present embodiment is executed by the control device 100 constituting the danger notification device. By executing the danger notification method according to the present embodiment, the object information for the notification about the presence of the front-side approaching object in the blind spot of the vehicle 10 is given to the rear-side approaching object, and the object information for the notification about the presence of the rear-side approaching object in the blind spot of the vehicle 10 is given to the front-side approaching object. As a result, the front-side approaching object and the rear-side approaching object can recognize the presence of each other invisible by being obstructed by the vehicle 10.

### 4. Examples of Use of Danger Notification Method

Several specific examples will be given below to describe actual situations of use of the danger notification method according to the present embodiment. In the following specific examples, it is assumed that the vehicle travels on the left side of roads. 4-1. Avoidance of Rush-out Accident at Crosswalk

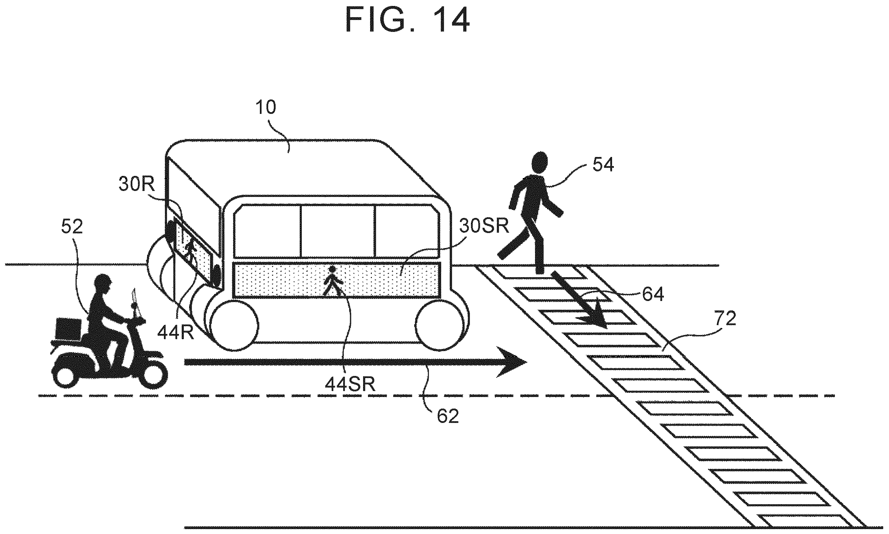

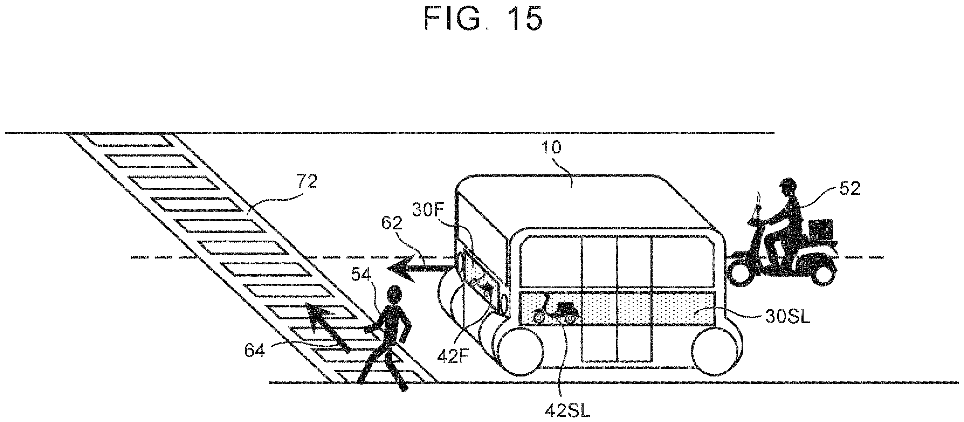

FIGS. 14 and 15 are schematic diagrams illustrating that a rush-out accident at a crosswalk is avoided by the danger notification method according to the present embodiment. FIG. 14 schematically shows a surrounding situation of the vehicle 10 on the right rear side of the vehicle 10. FIG. 15 schematically shows a surrounding situation of the vehicle 10 on the left front side of the vehicle 10. The surrounding situation shown in FIG. 14 and the surrounding situation shown in FIG. 15 coincide in time.

In the example shown in FIGS. 14 and 15, the vehicle 10 is stopped behind a crosswalk 72. The pedestrian 54 is located on the left front side of the vehicle 10 and is about to cross the crosswalk 72 by passing in front of the vehicle 10. The motorcycle 52 is about to overtake the vehicle 10 by passing on the right side of the vehicle 10 from behind the vehicle 10. In such a situation, the motorcycle 52 is invisible to the pedestrian 54 and the pedestrian 54 is invisible to the motorcycle 52 due to the blind spots around the vehicle 10. Therefore, a rush-out accident is likely to occur so that the motorcycle 52 comes into contact with the pedestrian 54 crossing the crosswalk 72.

In the danger notification method according to the present embodiment, when there is a possibility of intersection of the moving direction 64 of the pedestrian 54 and the moving direction 62 of the motorcycle 52, the motorcycle 52 is notified about the presence of the pedestrian 54 and the pedestrian 54 is notified about the presence of the motorcycle 52. Specifically, as shown in FIG. 14, the rear display panel 30R and the right side display panel 30SR visible to the motorcycle 52 display symbolic images 44R and 44SR of the pedestrian 54, respectively. As shown in FIG. 15, the front display panel 30F and the left side display panel 30SL visible to the pedestrian 54 display symbolic images 42F and 42SL of the motorcycle 52, respectively.

As described above, the object information for the notification about the presence of the pedestrian 54 in the blind spot of the vehicle 10 is given to the motorcycle 52 in the form of the symbolic images 44R and 44SR. The object information for the notification about the presence of the motorcycle 52 in the blind spot of the vehicle 10 is given to the pedestrian 54 in the form of the symbolic images 42F and 42SL. As a result, the motorcycle 52 and the pedestrian 54 can recognize the presence of each other invisible by being obstructed by the vehicle 10, thereby avoiding the rush-out accident at the crosswalk 72.

### 4-2. Avoidance of Contact Accident between Right-turning Vehicle and Oncoming Straightforward Vehicle

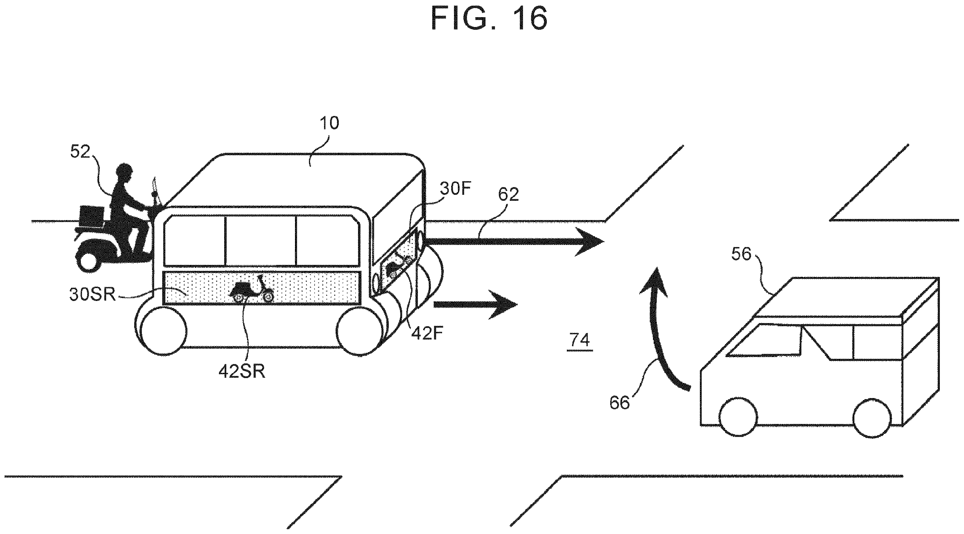

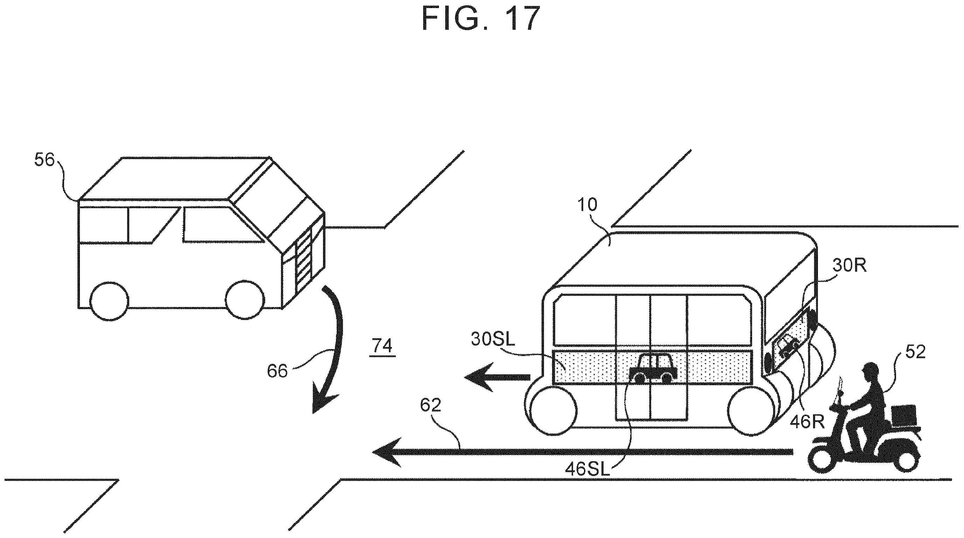

FIGS. 16 and 17 are schematic diagrams illustrating that a contact accident between a right-turning vehicle and an oncoming straightforward vehicle is avoided by the danger notification method according to the present embodiment. FIG. 16 schematically shows a surrounding situation of the vehicle 10 on the right front side of the vehicle 10. FIG. 17 schematically shows a surrounding situation of the vehicle 10 on the left rear side of the vehicle 10. The surrounding situation shown in FIG. 16 and the surrounding situation shown in FIG. 17 coincide in time.

In the example shown in FIGS. 16 and 17, the vehicle 10 is traveling slowly behind an intersection 74. For example, this situation corresponds to a situation in which the vehicle 10 is about to stop because the color of a traffic light installed at the intersection 74 has changed from green to yellow. The motorcycle 52 is about to overtake the vehicle 10 by passing on the left side of the vehicle 10 from behind the vehicle 10. In the situation in which the traffic light color changes from green to yellow, there is a vehicle like this motorcycle 52 that attempts to travel straight without stopping behind the intersection 74. A right-turning vehicle 56 is present in an oncoming lane on the right front side of the vehicle 10, and is about to turn right at the intersection 74 by passing in front of the vehicle 10. In such a situation, the motorcycle 52 is invisible to the right-turning vehicle 56 and the right-turning vehicle 56 is invisible to the motorcycle 52 due to the blind spots around the vehicle 10. Therefore, an accident is likely to occur so that the motorcycle 52 comes into contact with the right-turning vehicle 56 turning right at the intersection 74.

In the danger notification method according to the present embodiment, when there is a possibility of intersection of a moving direction 66 of the right-turning vehicle 56 and the moving direction 62 of the motorcycle 52, the motorcycle 52 is notified about the presence of the right-turning vehicle 56 and the right-turning vehicle 56 is notified about the presence of the motorcycle 52. Specifically, as shown in FIG. 16, the front display panel 30F and the right side display panel 30SR visible to the right-turning vehicle 56 display symbolic images 42F and 42SR of the motorcycle 52, respectively. As shown in FIG. 17, the rear display panel 30R and the left side display panel 30SL visible to the motorcycle 52 display symbolic images 46R and 46SL of the right-turning vehicle 56, respectively.

As described above, the object information for the notification about the presence of the motorcycle 52 in the blind spot of the vehicle 10 is given to the right-turning vehicle 56 in the form of the symbolic images 42F and 42SR. The object information for the notification about the presence of the right-turning vehicle 56 in the blind spot of the vehicle 10 is given to the motorcycle 52 in the form of the symbolic images 46R and 46SL. As a result, the right-turning vehicle 56 and the motorcycle 52 can recognize the presence of each other invisible by being obstructed by the vehicle 10, thereby avoiding the contact accident between the right-turning vehicle and the oncoming straightforward vehicle at the intersection 74.

### 4-3. Avoidance of "Thank-you" Accident

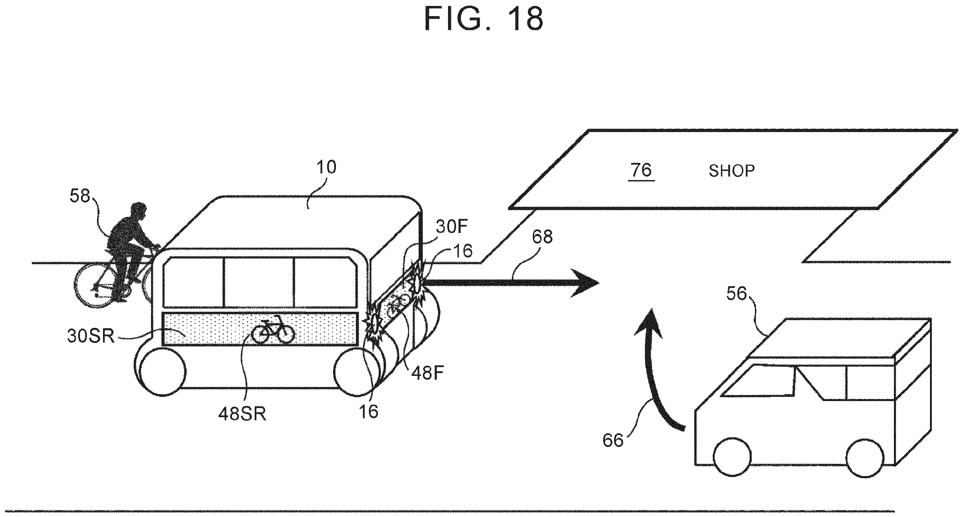

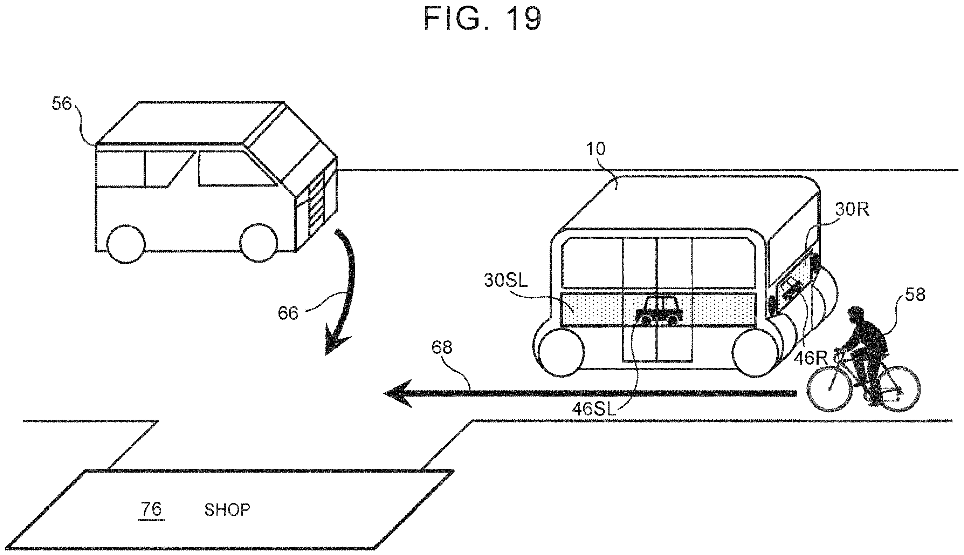

FIGS. 18 and 19 are schematic diagrams illustrating that a so-called "thank-you" accident is avoided by the danger notification method according to the present embodiment. FIG. 18 schematically shows a surrounding situation of the vehicle 10 on the right front side of the vehicle 10. FIG. 19 schematically shows a surrounding situation of the vehicle 10 on the left rear side of the vehicle 10. The surrounding situation shown in FIG. 18 and the surrounding situation shown in FIG. 19 coincide in time.

In the example shown in FIGS. 18 and 19, the vehicle 10 is stopped behind the entrance of a shop 76 on the left side of the road, and is blinking headlights 16 . This is a signal from the vehicle 10 to the right-turning vehicle 56 that is about to turn right from the oncoming lane to enter the shop 76. In response to the signal, the right-turning vehicle 56 determines that the vehicle 10 has given way to the right-turning vehicle 56, and is about to enter the shop 76 by turning right. A bicycle 58 is about to overtake the vehicle 10 by passing on the left side of the vehicle 10 from behind the vehicle 10. In such a situation, the bicycle 58 is invisible to the right-turning vehicle 56 and the right-turning vehicle 56 is invisible to the bicycle 58 due to the blind spots around the vehicle 10. Therefore, an accident is likely to occur so that the bicycle 58 comes into contact with the right-turning vehicle 56 turning right to enter the shop 76. That is, a so-called "thank-you" accident is likely to occur.

In the danger notification method according to the present embodiment, when there is a possibility of intersection of the moving direction 66 of the right-turning vehicle 56 and a moving direction 68 of the bicycle 58, the bicycle 58 is notified about the presence of the right-turning vehicle 56 and the right-turning vehicle 56 is notified about the presence of the bicycle 58. Specifically, as shown in FIG. 18, the front display panel 30F and the right side display panel 30SR visible to the right-turning vehicle 56 display symbolic images 48F and 48SR of the bicycle 58, respectively. As shown in FIG. 19, the rear display panel 30R and the left side display panel 30SL visible to the bicycle 58 display the symbolic images 46R and 46SL of the right-turning vehicle 56, respectively.

As described above, the object information for the notification about the presence of the bicycle 58 in the blind spot of the vehicle 10 is given to the right-turning vehicle 56 in the form of the symbolic images 48F and 48SR. The object information for the notification about the presence of the right-turning vehicle 56 in the blind spot of the vehicle 10 is given to the bicycle 58 in the form of the symbolic images 46R and 46SL. As a result, the right-turning vehicle 56 and the bicycle 58 can recognize the presence of each other invisible by being obstructed by the vehicle 10, thereby avoiding the so-called "thank-you" accident.

### 5. Others

The danger notification device according to the embodiment described above is applied to the bus-type autonomous driving vehicle. The autonomous driving vehicle to which the danger notification device of the present disclosure is applied may be, for example, a privately owned vehicle, a ride-sharing vehicle in which a plurality of people rides together, or a public transportation vehicle such as a bus or a taxi. The danger notification device of the present disclosure is also applicable to a vehicle other than the autonomous driving vehicle, such as a vehicle that is manually driven by a driver or a remotely driven vehicle that is remotely driven by a remote operator.

The danger notification device according to the embodiment described above displays the symbolic images of the first object and the second object on the display panels. The display panels may display images of the first object and the second object captured by the cameras. At this time, only the images of the first object and the second object may be displayed by removing backgrounds by image processing.

The notification device constituting the danger notification device of the present disclosure is not limited to the display device including the display panels oriented in different directions. For example, the notification device may be a lighting device including a plurality of lamps oriented in different directions, preferably directional lamps. In this case, the first object approaching the vehicle in the first direction can be notified about the presence of the second object by turning ON or blinking the lamp oriented to the first object. The second object approaching the vehicle in the second direction can be notified about the presence of the first object by turning ON or blinking the lamp oriented to the second object.

The notification device may be an audio output device including a plurality of directional speakers oriented in different directions. In this case, the first object approaching the vehicle in the first direction can be notified about the presence of the second object by sounding an alert from the directional speaker oriented to the first object. The second object approaching the vehicle in the second direction can be notified about the presence of the first object by sounding an alert from the directional speaker oriented to the second object.

The danger notification device according to the embodiment described above acquires the information related to the surrounding situation of the vehicle by the in-vehicle external sensors. The surrounding situation information may be acquired by road-to-vehicle communication with infrastructure equipment, vehicle-to-vehicle communication with other vehicles, or pedestrian-to-vehicle communication with pedestrians.

## Claims

1. A danger notification method using a notification device mounted on a vehicle, the danger notification method comprising:
detecting a first object approaching the vehicle in a first direction and a second object approaching the vehicle in a second direction (S1); and
notifying the first object and the second object about presence of each other by using the notification device in response to detection of the first object and the second object (S4).

2. The danger notification method according to claim 1, wherein the notifying the first object and the second object about the presence of each other is executed when determination is made that the first object and the second object are in a positional relationship in which the first object and the second object are invisible to each other by being obstructed by the vehicle (S2).

3. The danger notification method according to claim 1 or 2, wherein the notifying the first object and the second object about the presence of each other is executed when determination is made that there is a possibility of intersection of a moving direction of the first object and a moving direction of the second object (S24).

4. The danger notification method according to claim 3, wherein the notifying the first object and the second object about the presence of each other is executed when determination is made that there is a possibility of an overlap between a future position of the first object that is predicted from a motion of the first object and a future position of the second object that is predicted from a motion of the second object (S24).

5. The danger notification method according to any one of claims 1 to 4, wherein the notifying the first object and the second object about the presence of each other includes
displaying second-object information for notifying the first object about presence of the second object on a display device for the first object (S43R), and
displaying first-object information for notifying the second object about presence of the first object on the display device for the second object (S43F).

6. The danger notification method according to claim 5, wherein:
the display device includes a first display panel and a second display panel oriented in different directions from each other;
the displaying the second-object information on the display device for the first object includes displaying the second-object information on the first display panel visible to the first object; and
the displaying the first-object information on the display device for the second object includes displaying the first-object information on the second display panel visible to the second object.

7. The danger notification method according to claim 6, wherein:
the displaying the second-object information on the first display panel includes displaying a symbolic image of the second object; and
the displaying the first-object information on the second display panel includes displaying a symbolic image of the first object.

8. The danger notification method according to claim 7, wherein:
the displaying the second-object information on the first display panel includes highlighting the symbolic image of the second object on the first display panel in a case where a period to be taken until the second object and the first object come into contact with each other is shorter than a predetermined period as compared with a case where the period to be taken until the second object and the first object come into contact with each other is equal to or longer than the predetermined period; and
the displaying the first-object information on the second display panel includes highlighting the symbolic image of the first object on the second display panel in the case where the period to be taken until the second object and the first object come into contact with each other is shorter than the predetermined period as compared with the case where the period to be taken until the second object and the first object come into contact with each other is equal to or longer than the predetermined period.

9. The danger notification method according to claim 7 or 8, wherein:
the displaying the symbolic image of the second object includes increasing a size of the symbolic image of the second object as the second object approaches the first object; and
the displaying the symbolic image of the first object includes increasing a size of the symbolic image of the first object as the first object approaches the second object.

10. The danger notification method according to any one of claims 6 to 9, wherein:
the displaying the second-object information on the first display panel includes highlighting the second-object information as the second object approaches the first object; and
the displaying the first-object information on the second display panel includes highlighting the first-object information as the first object approaches the second object.

11. The danger notification method according to any one of claims 1 to 10, further comprising executing the danger notification method when the vehicle is stopped or traveling slowly.

12. The danger notification method according to any one of claims 1 to 11, wherein:
the first direction is a direction in which the first object approaches the vehicle from a front side of the vehicle; and
the second direction is a direction in which the second object approaches the vehicle from a rear side of the vehicle.

13. A danger notification device to be mounted on a vehicle, the danger notification device comprising:
an information acquisition device (20F,20R, 22F-22RR, 24FL-24RR) configured to acquire information related to a surrounding situation of the vehicle;
a notification device (30F-30SL) configured to give a notification toward an outside of the vehicle; and
a control device (100), wherein the control device is configured to:
detect a first object (52,54) approaching the vehicle in a first direction and a second object (54,52) approaching the vehicle in a second direction based on the information acquired by the information acquisition device; and
notify the first object and the second object about presence of each other by using the notification device in response to detection of the first object and the second object.

14. A non-transitory storage medium storing instructions that cause one or more processors to perform processes comprising:
detecting a first object approaching a vehicle in a first direction and a second object approaching the vehicle in a second direction; and
notifying the first object and the second object about presence of each other by using a notification device mounted on the vehicle in response to detection of the first object and the second object.
